# EUROPÄISCHE PATENTSCHRIFT

(11) **EP 3 783 248 B1**
(45) Veröffentlichungstag und Bekanntmachung des Hinweises auf die Patenterteilung: **26.01.2022**
(21) Anmeldenummer: 20187890.7
(22) Anmeldetag: 27.07.2020
(51) Int. Cl.: F16J 15/3268, G01F 15/18, F16J 15/06

(54) **PROZESSANSCHLUSS MIT EINER RINGFÖRMIGEN FORMDICHTUNG**
PROCESS CONNECTION WITH ANNULAR MOULDED SEAL
RACCORD DE PROCESS DOTÉ D'UN JOINT D'ÉTANCHÉITÉ MOULÉ ANNULAIRE

(30) Priorität: 22.08.2019 DE 102019122624
(43) Veröffentlichungstag der Anmeldung: 24.02.2021
(73) Patentinhaber: SICK AG, 79183 Waldkirch (DE)
(72) Erfinder: Scholder, Jochen, 79183 Waldkirch (DE); Schätzle, Sebastian, 79183 Waldkirch (DE)

(56) Entgegenhaltungen:
- DE-A1- 3 225 906
- DE-C2- 3 225 906
- US-A1- 2016 025 222

## Beschreibung

Die vorliegende Erfindung betrifft einen Prozessanschluss mit einer ringförmigen Formdichtung nach dem Oberbegriff von Anspruch 1.

Ein Prozessanschluss dient dazu, einen Sensor in einer Prozessanlage derart zu montieren, dass eine Messsonde in die Prozessumgebung ragen kann und Bestandteile des Sensors, wie ein Sensorgehäuse mit Bedientasten und Anzeigefeldern, außerhalb der Prozessumgebung geschützt vor der Prozessumgebung angeordnet sind.

Derartige Sensoren sind beispielsweise Durchflusssensoren bzw. Durchflusswächter der Anmelderin mit der Bezeichnung T-Easic FTS.

Zur Bestimmung von Prozessgrößen eines Mediums in einem Behälter sind diverse Sensoren bekannt, die beispielsweise den Füllstand oder die Temperatur messen. Obwohl es auch berührungslose Messverfahren gibt, nutzen viele Sensoren eine Sonde, die in das zu vermessende Medium eintaucht. So misst die beispielsweise aus DE 10 2007 030 847 A1 bekannte Füllstandmessung mit Zeitbereichsreflektometrie (TDR, Time Domain Reflectometry) die Laufzeit von in der Sonde geführten Mikrowellenpulsen bis zur Oberfläche des Mediums.

Bei diesen Prozessanschlüssen handelt es sich um handelsübliche Klemmringverschraubungen, die als Katalogware erhältlich sind. Die Klemmringverschraubungen sind ein gängiges Mittel, um in der Prozessmesstechnik Messsonden oder auch Rohre in einem Prozess zu installieren und zu verbinden. Die Klemmringverschraubungen sind gemäß der European Hygienic Engineering & Design Group (EHEDG) nicht hygienisch dichtend. Es sind prozessseitig viele enge Spalten vorhanden, in denen sich Bakterien absetzen können.

Die EHEDG vergibt Zertifizierungen für Produkte im Bereich von hygienischer Prozessmesstechnik.

Die EHEDG hat verschiedene Guidelines für die Konstruktion im hygienischen Bereich Food-Contact. In der Guideline DOC25 ist beschrieben, wie Gleitringdichtungen für hygienische Anwendungen auszusehen haben. Sie sollen in Form einer Lippendichtung konstruiert werden. Jedoch sind derartige Lippendichtungen nicht genügend druckstabil.

Weiter gibt es fest installierte Prozessanschlüsse an einem Sensorgehäuse. Eine gängige Methode, um hygienische Verbindungen von Bauteilen, beispielsweise einem Prozessanschluss an einem Sensorgehäuse zu schaffen, ist die Bauteile miteinander zu verschweißen. Die Schweißnaht sorgt dafür, dass es einen spaltfreien Übergang zwischen dem Sensorgehäuse und dem Prozessanschluss gibt. Allerdings kann diese Verbindung von dem Anwender nicht wieder gelöst werden. Der Prozessanschluss ist fest fixiert und kann nicht mehr verändert werden.

Die US 2016 002 5222 A1 offenbart ein Sensorsystem zum Erfassen mindestens einer Eigenschaft eines Messgases in einem Messgasraum. Das Sensorsystem umfasst eine Sonde zum Erfassen der Eigenschaft des Messgases. Die Sonde hat mindestens ein Sensorelement und mindestens ein Gehäuse, das das Sensorelement umgibt. Das Gehäuse ist so ausgebildet, dass das Sensorelement im Gehäuse mit dem Messgas beaufschlagt werden kann. Die Sonde umfasst außerdem ein Aufnahmeelement, das mit einer Wand des Messgasraums verbindbar ist. Die Sonde ist entlang einer Einführungsachse in das Aufnahmeelement einführbar und im Aufnahmeelement befestigbar. Die Sonde ist durch mindestens eine Dichtung gegen den Messgasraum abdichtbar. Die Dichtung umfasst mindestens eine Lineardichtung.

Eine Aufgabe der Erfindung besteht darin, einen Prozessanschluss bereitzustellen, der gemäß der EHEDG als hygienetauglich gilt und dicht ist und gleichzeitig an einer Messsonde einer Prozessmesssensorik variabel positionierbar ist.

Eine weitere Aufgabe der Erfindung besteht darin, einen Prozessanschluss bzw. einen Adapter bereitzustellen, mit dem es möglich ist, mittels einer handelsüblichen Klemmringverschraubung und dem Prozessanschluss einen hygienetauglichen Prozessanschluss für einen Sensor bereitzustellen. Der Prozessanschluss soll auf der Messsonde flexibel positionierbar sein und austauschbar sein.

Die Aufgabe wird gemäß Anspruch 1 gelöst durch einen Prozessanschluss mit einer ringförmigen Formdichtung und einer zylindrischen Messsonde eines Sensors, wobei die Formdichtung zum Abdichten einer Prozessumgebung vorgesehen ist, wobei die Formdichtung zwischen dem Prozessanschluss und der Messsonde liegt, die Formdichtung mittels eines Niederhalter fixierbar ist, die Formdichtung an einer ersten ringförmigen Dichtkante an dem Prozessanschluss anliegt, die Formdichtung die zylindrische Messsonde an einer zweiten ringförmigen Dichtkante umschließt, die Formdichtung mindestens eine Außenmantelkegelfläche mit einem Außenmantelkegelwinkel aufweist und der Prozessanschluss eine Innenkegelfläche mit einem Innenkegelwinkel aufweist, wobei die Formdichtung an der ersten ringförmigen Dichtkante der Innenkegelfläche des Prozessanschlusses anliegt, wobei der Außenmantelkegelwinkel kleiner ist, als der Innenkegelwinkel, wobei der Niederhalter einen Ansatz aufweist, der in die Formdichtung ragt.

Dadurch ist die Prozessumgebung dicht gegenüber einer Außenumgebung abgedichtet. In der Prozessumgebung befinden sich beispielsweise Wasser oder ölbasierte Flüssigkeiten. Die Prozesstemperatur weist beispielsweise Temperaturen von -40°C bis +150°C auf. Der Prozessdruck beträgt beispielsweise bis zu 16 bar.

Die Formdichtung ist aus einem flexiblem Werkstoff, zum Beispiel ein Elastomer (FKM, EPDM, NBR) oder beispielsweise aus einem Silikon gefertigt. Die Formdichtung weist an dem Ende, welches die zweite ringförmige Dichtkante aufweist, eine Konusform auf. Die Formdichtung wird in einen Dichtungssitz des Prozessanschlusses eingelegt. Der Niederhalter wirkt eine definierte Kraft auf die Formdichtung aus.

Die Formdichtung wird mittels des in dem Prozessanschluss montierten Niederhalter fixiert. Über den Niederhalter werden durch die Montage Druckkräfte auf die Formdichtung erzeugt. Diese Druckkräfte sorgen dafür, dass sich die Formdichtung mit der Konusform an die Messsonde anformt und die Messsonde spaltfrei abdichtet. Dadurch ist die Dichtung im Sinn der EHEDG hygienetauglich. Der Niederhalter verpresst die Formdichtung und dichtet an der ersten ringförmigen Dichtkante an dem Prozessanschluss hygienisch ohne Spalt ab.

Der Außenmantelkegelwinkel der Außenmantelkegelfläche der Formdichtung ist kleiner als der Innenkegelwinkel der Innenkegelfläche des Prozessanschlusses, wodurch die Formdichtung an der ersten ringförmigen Dichtkante an der Innenkegelfläche des Prozessanschlusses dicht anliegt. Die erste ringförmige Dichtkante liegt auch beispielsweise an einer Planseite des Prozessanschlusses, welche der Prozessumgebung zugewandt ist. Damit liegt die Formdichtung mit der Außenmantelkegelfläche an der ersten ringförmigen Dichtkante der Innenkegelfläche des Prozessanschlusses an.

Durch das Einschieben der Messsonde in die Formdichtung an der zweiten ringförmigen Dichtung wird die zweite ringförmige Dichtung nach Außen verdrängt. Hierbei wirkt die erste ringförmige Dichtkante als Gegenlager bzw. als Drehpunkt, was die Dichtwirkung an der ersten ringförmigen Dichtkante weiter verstärkt.

Durch die Form der Formdichtung hat die Formdichtung bei steigendem Prozessdruck eine selbstverstärkende Dichtkantenfunktion an der zweiten ringförmigen Dichtkante.

Ein kleinster Durchmesser der Formdichtung hat beispielsweise einen Durchmesser von 7,6 mm und die Messsonde beispielsweise einen Durchmesser von 8 mm. Die umlaufende Vorspannung für die zweite ringförmige Dichtkante beträgt demnach umlaufend beispielsweise 0,2 mm.

Es können gemäß der Erfindung auch kleinere oder größere Durchmesser der Formdichtung oder der Messsonde vorgesehen sein.

In Weiterbildung der Erfindung weist der Niederhalter ein Gewinde auf. Dadurch kann der Niederhalter durch eine Drehbewegung gegen die Formdichtung gedrückt werden. Dadurch können hohe Kräfte auf die Formdichtung ausgeübt werden. Ist der Niederhalter mit dem Gewinde realisiert, kann die Kraft durch ein definiertes Drehmoment aufgebracht werden.

In Weiterbildung der Erfindung ist zwischen dem Niederhalter und der Formdichtung ein Einlegering angeordnet. Der Einlegering ist weist beispielsweise gegenüber der Formdichtung eine höhere Reibung auf, als gegenüber dem Niederhalter. Damit bildet sich zwischen dem Niederhalter und dem Einlegering ein Gleitlager bei der Montage des Niederhalters. Damit werden auf die Formdichtung nur Druckkräfte ausgeübt und keine Drehkräfte, die zu einem Verrutschen der Formdichtung führen könnten. Somit wird die Position der Formdichtung bei der Montage gewährleistet.

Um ein Auswölben der Formdichtung nach Innen zur Messsonde beim Beaufschlagen der Druckkraft durch den Niederhalter zu vermeiden, kann der Einlegering aus einem harten Werkstoff, zum Beispiel Stahl, eingesetzt werden. Dieser Einlegering sorgt dafür, dass sich die Formdichtung aus einem weichen Werkstoff nur nach außen wölbt. Der Einlegering bleibt auch nach Beaufschlagen der Kraft durch den Niederhalter weiterhin in Form.

Gemäß der Erfindung weist der Niederhalter einen Ansatz auf, der in die Formdichtung ragt. Der Ansatz kann auch als Vorsatz bezeichnet werden, da der Ansatz zumindest teilweise in die Formdichtung ragt und damit die Formdichtung stabilisiert und/oder positioniert.

Beispielsweise kann der Ansatz am Niederhalter in gerader Form oder in kegeliger Form eine gewünschte Wirkung der nicht gewollten Auswölbung der Formdichtung nach Innen zur Messsonde erbringen.

In Weiterbildung der Erfindung sind an einer kreiszylindrischen Außenfläche der Formdichtung punktförmige Noppen entlang eines Umfanges angeordnet.

Eine radiale Zentrierung der Formdichtung erfolgt in einem zylindrischen Abschnitt oder Ansatz des Prozessanschlusses, welcher als Gegenlager der Formdichtung ausgebildet ist. Die in der Formdichtung integrierten Noppen sorgen zum einen für einen Toleranzausgleich zwischen Lagerung und Formdichtung, zum anderen für einen ausreichenden Luftspalt, der als Verdrängungsraum für die Formdichtung dient. Dieser Verdrängungsraum ist erforderlich, da Elastomere als Werkstoff für die Formdichtung nicht kompressibel bzw. komprimierbar sind.

Am Außendurchmesser der Formdichtung lassen sich die Noppen einfach integrieren, indem eine Trennebene des Herstellungswerkzeuges entsprechend gewählt wird.

Die Formdichtung bleibt durch die Noppen am Außendurchmesser im Dichtungssitz des Prozessanschlusses sitzen und beispielsweise in Form.

Beispielsweise sind 8 Noppen gleichmäßig verteilt mit äquidistanten Abständen an der kreiszylindrischen Außenfläche angeordnet.

In Weiterbildung der Erfindung sind an einer kreiszylindrischen Innenfläche der Formdichtung linienförmige Rippen entlang eines Umfangs angeordnet, wobei die linienförmigen Rippen parallel zueinander sind.

Die Zentrierung der Messsonde erfolgt mit den linienförmigen Rippen ebenfalls in einem zylindrischen Teil der Formdichtung. Die in der Formdichtung integrierten Rippen sorgen zum einen für einen Toleranzausgleich zwischen Messsonde und Formdichtung, zum anderen für einen ausreichenden Luftspalt, der als Verdrängungsraum für die Formdichtung dient.

Die Ausführung von Rippen im Innendurchmesser der Formdichtung erlaubt es, die Formdichtung bei der Herstellung einfach entformen zu können, so dass keine Hinterschnitte vorhanden sind.

Die Formdichtung bleibt durch die Rippen am Innendurchmesser an der Messsonde sitzen und beispielsweise in Form. Zudem stabilisieren die Rippen die Formdichtung, sodass diese den Kräften des Niederhalter standhält.

Beispielsweise sind vier Rippen gleichmäßig verteilt mit äquidistanten Abständen an der kreiszylindrischen Innenfläche angeordnet.

In Weiterbildung der Erfindung ist eine Anpressfläche der Formdichtung für den Niederhalter senkrecht zu einer Längsachse der Messsonde. Dadurch wird die Formdichtung parallel zur Messsonde mit einer Druckkraft beaufschlagt.

In Weiterbildung der Erfindung weist die Formdichtung an der zweiten ringförmigen Dichtkante im Querschnitt einen spitzen Winkel auf. Dadurch ist die Dichtwirkung der zweite ringförmigen Dichtkante weiter erhöht, da die Anpresskräfte an der zweiten ringförmigen Dichtkante erhöht sind.

In Weiterbildung der Erfindung weist die Formdichtung eine Innenkegelmantelfläche auf, welche der Messsonde zugewandt ist.

In Weiterbildung der Erfindung bilden ein Kegelwinkel der Innenkegelmantelfläche der Formdichtung und eine Außenfläche der Formdichtung einen spitzen Winkel zueinander. Dadurch ist die Dichtwirkung der zweiten ringförmigen Dichtkante weiter erhöht, da die Anpresskräfte an der zweiten ringförmigen Dichtkante erhöht sind.

In Weiterbildung der Erfindung ist die Formdichtung aus einem flexiblem Werkstoff, zum Beispiel ein Elastomer (FKM, EPDM, NBR) oder beispielsweise aus einem Silikon. Der flexible Werkstoff kann eine Härte von 40-90 Shore A, insbesondere eine Härte von 60 bis 75 Shore A aufweisen. Das Material mit der Härte muss so gewählt werden, dass die Formdichtung die richtige Form behält, um Ihre Dichtwirkung zu erfüllen. Der Werkstoff selbst richtet sich nach der Anwendungsart und den Umgebungsbedingungen.

In Weiterbildung der Erfindung ist die Messsonde in der Formdichtung verschiebbar angeordnet. Dadurch kann die Messsonde an die Anwendung bzw. an die Applikation angepasst werden.

In Weiterbildung der Erfindung ist die Formdichtung nachrüstbar. Die Messsonde kann im Nachgang montiert bzw. zu einem späteren Zeitpunkt wieder demontiert werden. Der Prozessanschluss wird vorzugsweise vormontiert ausgeliefert, so dass der Prozessanschluss für einen Kunden anschlussfertig vorliegt.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor mit einer Messsonde und einem Prozessanschluss;
- Figur 2: einen Schnitt durch den Prozessanschluss gemäß Figur 1;
- Figur 3: eine Formdichtung und einen Schnitt durch eine Formdichtung des Prozessanschlusses gemäß Figur 2 in einer vergrößerten Darstellung;
- Figur 4: eine Formdichtung in einer perspektivischen Darstellung;
- Figur 5: eine Formdichtung in einer perspektivischen Darstellung;
- Figur 6: eine Formdichtung in einer Seitenansicht;
- Figur 7: eine Formdichtung in einer Draufsicht;
- Figur 8: eine Formdichtung mit einem Einlegering;
- Figur 9: eine Formdichtung mit einem geraden Ansatz;
- Figur 10: eine Formdichtung mit einem kegelförmigen Ansatz.

In den nachfolgenden Figuren sind identische Teile mit identischen Bezugszeichen versehen.

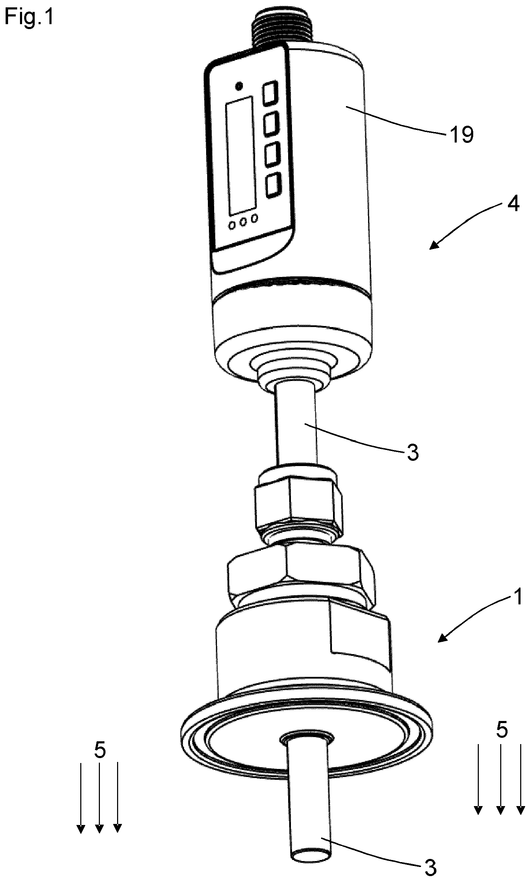

Figur 1 zeigt einen Sensor 4 mit einer Messsonde 3 und einem Prozessanschluss 1. Der Prozessanschluss 1 trennt eine Prozessumgebung 5 mit Prozessumgebungsbedingungen von der Umgebung, in der das Gehäuse 19 des Sensors 4 angeordnet ist. Mit Sensor 4 wird hier das ganze Messgerät bezeichnet. Der Sensor 4 weist mindestens ein Sensorelement auf.

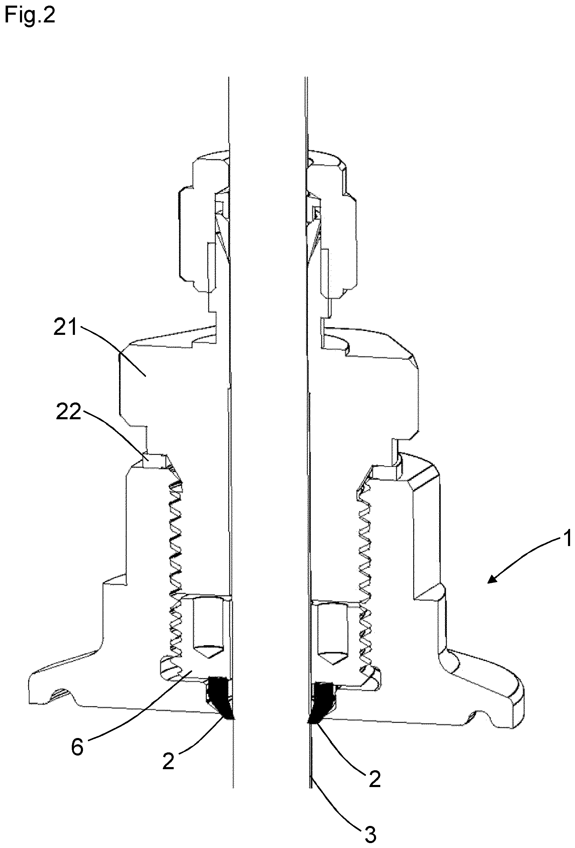

Figur 2 zeigt einen Schnitt durch den Prozessanschluss 1 gemäß Figur 1. Die Formdichtung 2 ist in montierten Zustand dargestellt und liegt an der zylindrischen Messsonde 3 an. Die Formdichtung wird durch die Montage des Niederhalters 6 fixiert. Der Niederhalter wird durch die Klemmringverschraubung 21 fixiert. Die Klemmringverschraubung 21 wird mittels einer Dichtung 22 abgedichtet.

Gemäß Figur 2 weist der Niederhalter optional ein Gewinde auf. Dadurch kann der Niederhalter durch eine Drehbewegung gegen die Formdichtung gedrückt werden.

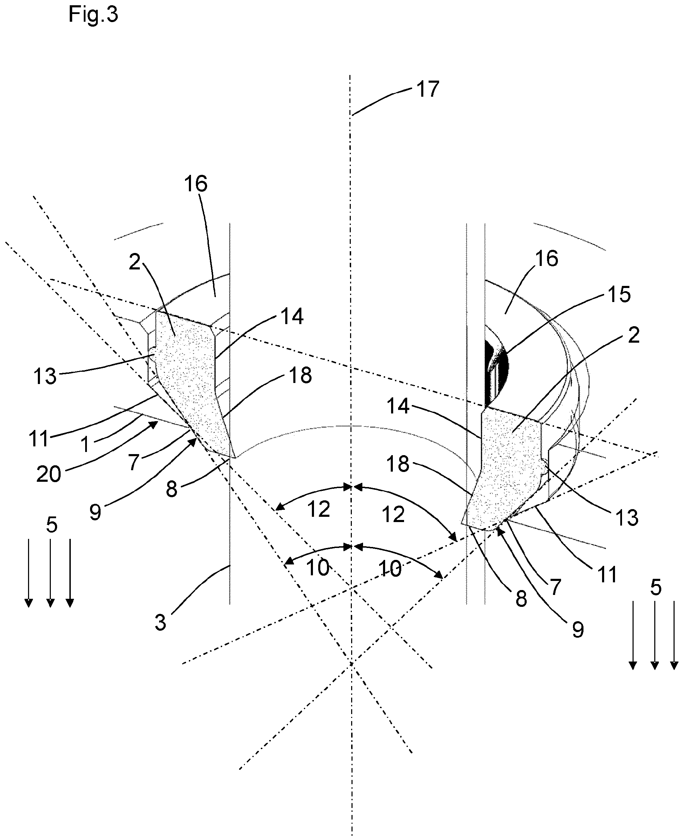

Figur 3 zeigt die Formdichtung 2 und einen Schnitt durch die Formdichtung 2 des Prozessanschlusses 1 gemäß Figur 2 in einer vergrößerten Darstellung.

Figur 3 zeigt den Prozessanschluss 1 mit einer ringförmigen Formdichtung 2 und einer zylindrischen Messsonde 3 eines Sensors 4, wobei die Formdichtung 2 zum Abdichten einer Prozessumgebung 5 vorgesehen ist, wobei die Formdichtung 2 zwischen dem Prozessanschluss 1 und der Messsonde 3 liegt, die Formdichtung 2 mittels eines Niederhalters 6 (vgl. Figur 2) fixierbar ist, die Formdichtung 2 an einer ersten ringförmigen Dichtkante 7 an dem Prozessanschluss 1 anliegt, die Formdichtung 2 die zylindrische Messsonde 3 an einer zweiten ringförmigen Dichtkante 8 umschließt, die Formdichtung 2 mindestens eine Außenmantelkegelfläche 9 mit einem Außenmantelkegelwinkel 10 aufweist und der Prozessanschluss 1 eine Innenkegelfläche 11 mit einem Innenkegelwinkel 12 aufweist, wobei die Formdichtung 2 an der ersten ringförmigen Dichtkante 7 der Innenkegelfläche 11 des Prozessanschlusses 1 anliegt, wobei der Außenmantelkegelwinkel 10 kleiner ist als der Innenkegelwinkel 12.

Der Außenmantelkegelwinkel 10 und der Innenkegelwinkel 12 ist gegenüber einer Längsachse 17 der Messsonde definiert und angegeben.

Dadurch ist die Prozessumgebung 5 dicht gegenüber einer Außenumgebung abgedichtet. In der Prozessumgebung 5 befinden sich beispielsweise Wasser oder ölbasierte Flüssigkeiten. Die Prozesstemperatur weist beispielsweise Temperaturen von -40°C bis +150°C auf. Der Prozessdruck beträgt beispielsweise bis zu 16 bar.

Die Formdichtung 2 ist aus einem flexiblen Werkstoff, insbesondere aus einem flexiblen Kunststoff gefertigt. Die Formdichtung 2 weist an dem Ende, welches die zweite ringförmige Dichtkante 8 aufweist oder bildet, eine Konusform auf. Die Formdichtung 2 wird in einen Dichtungssitz des Prozessanschlusses 1 eingelegt. Der Niederhalter 6 wird mit einer vordefinierten Kraft montiert. Ist der Niederhalter beispielsweise mit einem Gewinde realisiert, kann diese Kraft durch ein definiertes Drehmoment aufgebracht werden.

Die Formdichtung 2 wird mittels des in dem Prozessanschluss 1 montierten Niederhalter (vgl. Figur 2) fixiert. Über den Niederhalter werden durch die Montage Druckkräfte auf die Formdichtung 2 erzeugt. Diese Druckkräfte sorgen dafür, dass sich die Formdichtung 2 mit der Konusform an die Messsonde 3 anformt und die Messsonde 3 spaltfrei abdichtet. Dadurch ist die Formdichtung 2 bzw. die Dichtstelle im Sinn der EHEDG hygienetauglich. Der Niederhalter verpresst die Formdichtung 2 und dichtet an der ersten ringförmigen Dichtkante 7 an dem Prozessanschluss 1 hygienisch ohne Spalt ab.

Der Außenmantelkegelwinkel 10 der Außenmantelkegelfläche 9 der Formdichtung 2 ist kleiner als der Innenkegelwinkel 12 der Innenkegelfläche 11 des Prozessanschlusses 1, wodurch die Formdichtung 2 an der ersten ringförmigen Dichtkante 7 an der Innenkegelfläche 11 des Prozessanschlusses 1 dicht anliegt. Die erste ringförmige Dichtkante 7 liegt auch beispielsweise an einer Planseite 20 des Prozessanschlusses 1, welche der Prozessumgebung 5 zugewandt ist. Damit liegt die Formdichtung 2 mit der Außenmantelkegelfläche 9 an der ersten ringförmigen Dichtkante 7 der Innenkegelfläche 11 des Prozessanschlusses 1 an.

Durch das Einschieben der Messsonde 3 in die Formdichtung 2 an der zweiten ringförmigen Dichtung 8 wird die zweite ringförmige Dichtung 8 nach Außen verdrängt. Hierbei wirkt die erste ringförmige Dichtkante 7 als Gegenlager bzw. als Drehpunkt, was die Dichtwirkung an der ersten ringförmigen Dichtkante 7 weiter verstärkt.

Durch die Form der Formdichtung 2 hat die Formdichtung 2 bei steigendem Prozessdruck eine selbstverstärkende Dichtkantenfunktion an der zweiten ringförmigen Dichtkante 8.

Ein kleinster Durchmesser der Formdichtung 2 hat beispielsweise einen Durchmesser von 7,6 mm und die Messsonde 3 beispielsweise einen Durchmesser von 8 mm. Die umlaufende Vorspannung für die zweite ringförmige Dichtkante beträgt demnach umlaufend beispielsweise 0,2 mm.

Es können auch kleinere oder größere Durchmesser der Formdichtung 2 oder der Messsonde 3 vorgesehen sein.

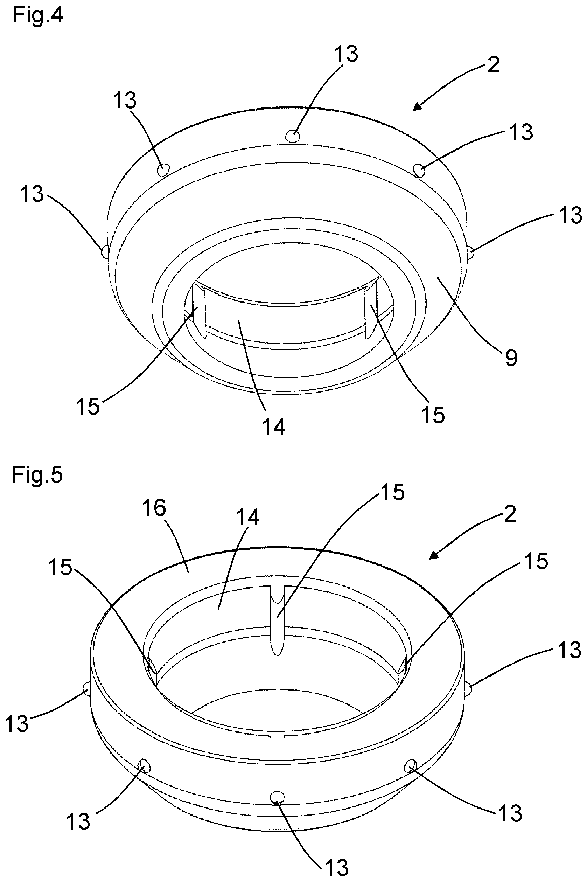

Gemäß Figuren 3 bis 7 sind an einer kreiszylindrischen Außenfläche punktförmige Noppen 13 entlang eines Umfanges angeordnet.

Eine radiale Zentrierung der Formdichtung 2 erfolgt gemäß Figur 3 in einem zylindrischen Abschnitt oder Ansatz des Prozessanschlusses 1, welcher als Gegenlager der Formdichtung 2 ausgebildet ist. Die in der Formdichtung 2 integrierten Noppen 13 sorgen zum einen für einen Toleranzausgleich zwischen Lagerung und Formdichtung 2, zum anderen für einen ausreichenden Luftspalt, der als Verdrängungsraum für die Formdichtung 2 dient. Dieser Verdrängungsraum ist erforderlich, da Elastomere als Werkstoff für die Formdichtung nicht kompressibel bzw. komprimierbar sind.

Am Außendurchmesser der Formdichtung 2 lassen sich die Noppen 13 einfach integrieren, indem eine Trennebene des Herstellungswerkzeuges entsprechend gewählt wird.

Die Formdichtung 2 bleibt durch die Noppen 13 am Außendurchmesser im Dichtungssitz des Prozessanschlusses 1 sitzen und beispielsweise in Form.

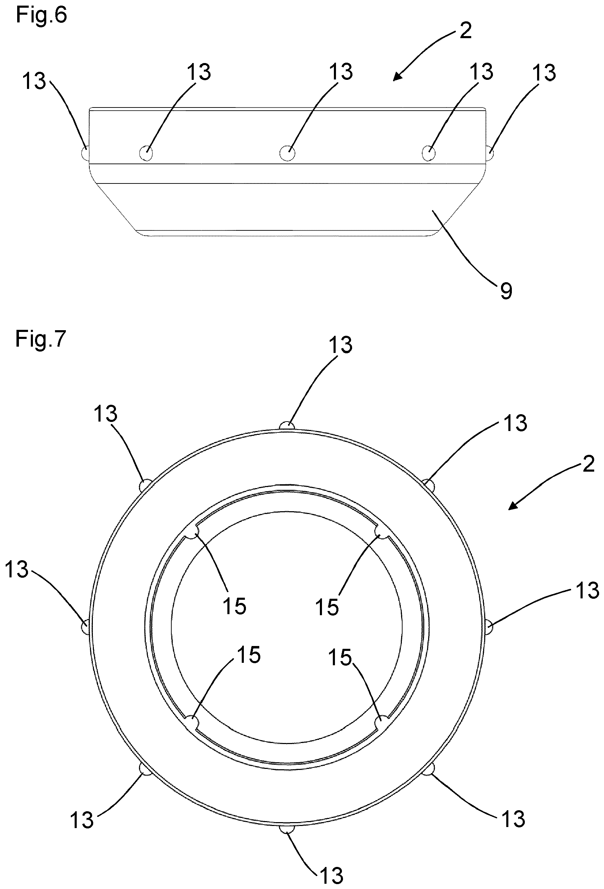

Beispielsweise sind gemäß Figur 7 acht Noppen 13 gleichmäßig verteilt mit äquidistanten Abständen an der kreiszylindrischen Außenfläche angeordnet.

Gemäß Figur 3 bis 7 sind an einer kreiszylindrischen Innenfläche 14 linienförmige Rippen 15 entlang eines Umfangs angeordnet, wobei die linienförmigen Rippen 15 parallel zueinander sind.

Die Zentrierung der Messsonde 3 erfolgt gemäß Figur 3 mit den linienförmigen Rippen 15 ebenfalls in einem zylindrischen Teil der Formdichtung 2. Die in der Formdichtung 2 integrierten Rippen 15 sorgen zum einen für einen Toleranzausgleich zwischen Messsonde 3 und Formdichtung 2, zum anderen für einen ausreichenden Luftspalt, der als Verdrängungsraum für die Formdichtung 2 dient.

Die Ausführung von Rippen 15 im Innendurchmesser der Formdichtung 2 erlaubt es, die Formdichtung 2 bei der Herstellung einfach entformen zu können, so dass keine Hinterschnitte vorhanden sind.

Die Formdichtung 2 bleibt durch die Rippen 15 am Innendurchmesser an der Messsonde 3 sitzen und beispielsweise in Form. Zudem stabilisieren die Rippen 15 die Formdichtung 2, sodass diese den Kräften des Niederhalter standhält.

Figur 7 zeigt eine Draufsicht auf die Formdichtung. Gemäß Figur 7 sind beispielsweise vier Rippen 15 gleichmäßig verteilt mit äquidistanten Abständen an der kreiszylindrischen Innenfläche angeordnet. Figur 6 zeigt eine Seitenansicht der Formdichtung mit den punktförmigen Noppen 13.

Gemäß Figur 3 ist eine Anpressfläche 16 der Formdichtung 2 für den Niederhalter (vgl. Figur 2) senkrecht zu einer Längsachse 17 der Messsonde. Dadurch wird die Formdichtung 2 parallel zur Messsonde 3 mit einer Druckkraft beaufschlagt.

Gemäß Figur 3 weist die Formdichtung 2 an der zweiten ringförmigen Dichtkante 8 im Querschnitt einen spitzen Winkel auf. Dadurch ist die Dichtwirkung der zweiten ringförmigen Dichtkante 8 weiter erhöht, da die Anpresskräfte an der zweiten ringförmigen Dichtkante 8 erhöht sind.

Gemäß Figur 3 weist die Formdichtung 2 eine Innenkegelmantelfläche 18 auf, welche der Messsonde 3 zugewandt ist.

Gemäß Figur 3 bilden ein Kegelwinkel der Innenkegelmantelfläche 18 der Formdichtung 2 und eine Außenfläche der Formdichtung 2 einen spitzen Winkel zueinander. Dadurch ist die Dichtwirkung der zweiten ringförmigen Dichtkante 8 weiter erhöht, da die Anpresskräfte an der zweiten ringförmigen Dichtkante 8 erhöht sind.

Gemäß Figur 3 ist die Formdichtung beispielsweise aus FKM und weist eine Härte 70 Shore A auf.

Gemäß den Figuren 1 bis 3 ist die Messsonde 3 in der Formdichtung 2 verschiebbar angeordnet. Dadurch kann die Messsonde an die Anwendung bzw. an die Applikation angepasst werden.

Gemäß Figur 1 ist die Formdichtung 2 nachrüstbar. Die Messsonde 3 kann im Nachgang montiert bzw. zu einem späteren Zeitpunkt wieder demontiert werden.

Der Prozessanschluss 1 wird vorzugsweise vormontiert ausgeliefert, so dass der Prozessanschluss 1 für einen Anwender anschlussfertig vorliegt.

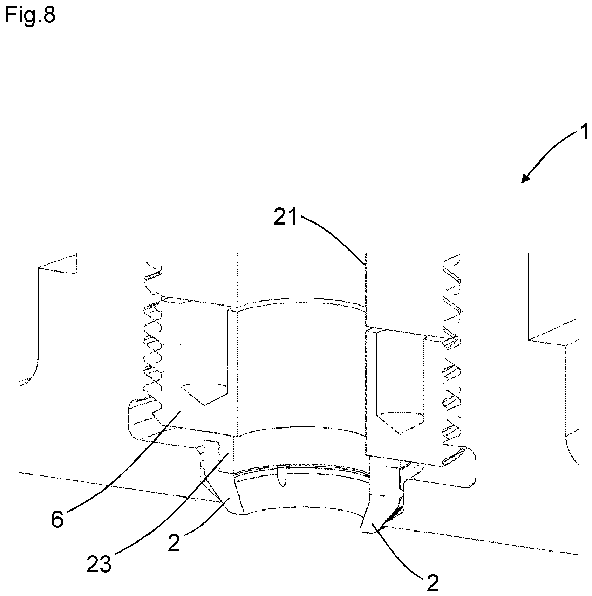

Gemäß Figur 8 ist zwischen dem Niederhalter 6 und der Formdichtung 2 ein Einlegering 23 angeordnet. Der Einlegering 23 weist beispielsweise gegenüber der Formdichtung 2 eine höhere Reibung auf als gegenüber dem Niederhalter 6. Damit bildet sich zwischen dem Niederhalter 6 und dem Einlegering 23 ein Gleitlager bei der Montage des Niederhalters 6. Damit werden auf die Formdichtung 2 nur Druckkräfte ausgeübt und keine Drehkräfte, die zu einem Verrutschen der Formdichtung 2 führen könnten.

Um ein Auswölben der Formdichtung 2 nach Innen zur Messsonde beim Beaufschlagen der Druckkraft durch den Niederhalter 6 zu vermeiden, kann der Einlegering 23 aus einem harten Werkstoff, zum Beispiel Stahl bzw. Edelstahl, eingesetzt werden. Dieser Einlegering 23 sorgt dafür, dass sich die Formdichtung 2 aus einem weichen Werkstoff nur nach außen wölbt. Der Einlegering 23 bleibt auch nach beaufschlagen der Kraft durch den Niederhalter 6 weiterhin in Form.

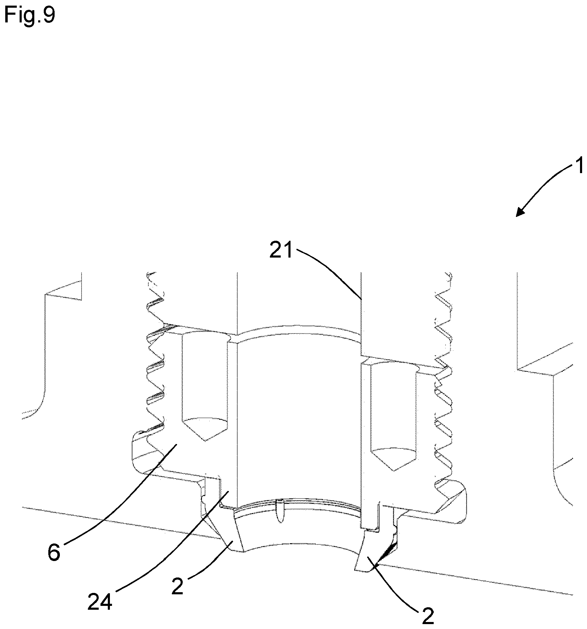

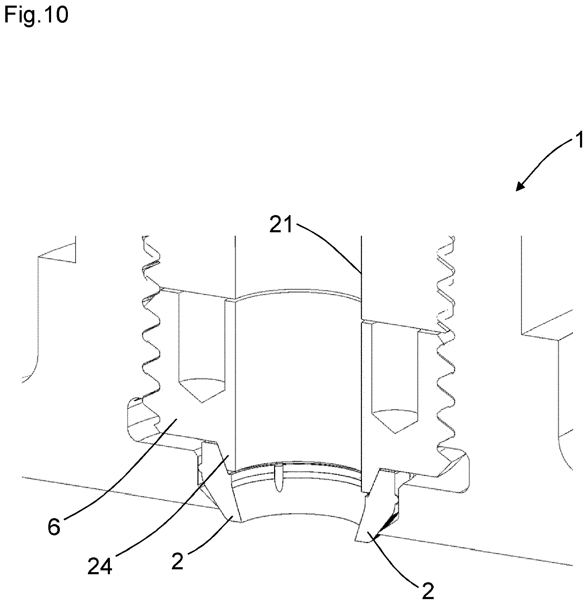

Gemäß Figur 9 und Figur 10 weist der Niederhalter 6 einen Ansatz 24 auf, der in die Formdichtung 2 ragt. Der Ansatz 24 kann auch als Vorsatz bezeichnet werden, da der Ansatz 24 zumindest teilweise in die Formdichtung 2 ragt und damit die Formdichtung 2 stabilisiert und/oder positioniert. Gemäß Figur 9 weist der Ansatz 24 eine gerade oder zylindrische Form auf. Gemäß Figur 10 weist der Ansatz 24 eine Kegelform auf.

### Bezugszeichen:

1 Prozessanschluss
2 ringförmige Formdichtung
3 zylindrische Messsonde
4 Sensor
5 Prozessumgebung
6 Niederhalter
7 erste ringförmige Dichtkante
8 zweite ringförmige Dichtkante
9 Außenmantelkegelfläche
10 Außenmantelkegelwinkel
11 Innenkegelfläche
12 Innenkegelwinkel
13 punktförmige Noppen
14 kreiszylindrische Innenfläche
15 linienförmige Rippen
16 Anpressfläche der Formdichtung
17 Längsachse der Messsonde
18 Innenkegelmantelfläche
19 Gehäuse
20 Planseite
21 Klemmringverschraubung
22 Dichtung
23 Einlegering
24 Ansatz

## Patentansprüche

1. Prozessanschluss (1) mit einer ringförmigen Formdichtung (2) und einer zylindrischen Messsonde (3) eines Sensors (4),
wobei die Formdichtung (2) zum Abdichten einer Prozessumgebung (5) vorhanden ist,
wobei die Formdichtung (2) zwischen dem Prozessanschluss (1) und der Messsonde (3) liegt,
die Formdichtung (2) mittels eines Niederhalters (6) fixierbar ist,
die Formdichtung (2) an einer ersten ringförmigen Dichtkante (7) an dem Prozessanschluss (1) anliegt,
wobei die Formdichtung (2) mindestens eine Außenmantelkegelfläche (9) mit einem Außenmantelkegelwinkel (10) aufweist und der Prozessanschluss (1) eine Innenkegelfläche (11) mit einem Innenkegelwinkel (12) aufweist, wobei die Formdichtung (2) an der ersten ringförmigen Dichtkante (7) der Innenkegelfläche (11) des Prozessanschlusses (1) anliegt,
wobei der Außenmantelkegelwinkel (10) kleiner ist als der Innenkegelwinkel (12), **dadurch gekennzeichnet, dass** die Formdichtung (2) die zylindrische Messsonde (3) an einer zweiten ringförmigen Dichtkante (8) umschließt, und der Niederhalter (6) einen Ansatz (24) aufweist, der in die Formdichtung (2) ragt.

2. Prozessanschluss nach Anspruch 1, **dadurch gekennzeichnet, dass** der Niederhalter (6) ein Gewinde aufweist.

3. Prozessanschluss nach mindestens einem der vorhergehenden Ansprüche, **dadurch gekennzeichnet, dass** zwischen dem Niederhalter (6) und der Formdichtung (2) ein Einlegering (23) angeordnet ist.

4. Prozessanschluss nach mindestens einem der vorhergehenden Ansprüche, **dadurch gekennzeichnet, dass** an einer kreiszylindrischen Außenfläche der Formdichtung (2) punktförmige Noppen (13) entlang eines Umfanges angeordnet sind.

5. Prozessanschluss nach mindestens einem der vorhergehenden Ansprüche, **dadurch gekennzeichnet, dass** an einer kreiszylindrischen Innenfläche der Formdichtung (2) linienförmige Rippen (15) entlang eines Umfangs angeordnet sind, wobei die linienförmigen Rippen (15) parallel zueinander sind.

6. Prozessanschluss nach mindestens einem der vorhergehenden Ansprüche, **dadurch gekennzeichnet, dass** eine Anpressfläche (16) der Formdichtung (2) für den Niederhalter (6) senkrecht zu einer Längsachse (17) der Messsonde (3) ist.

7. Prozessanschluss nach mindestens einem der vorhergehenden Ansprüche, **dadurch gekennzeichnet, dass** die Formdichtung (2) an der zweiten ringförmigen Dichtkante (8) im Querschnitt einen spitzen Winkel aufweist.

8. Prozessanschluss nach mindestens einem der vorhergehenden Ansprüche, **dadurch gekennzeichnet, dass** die Formdichtung (2) eine Innenkegelmantelfläche (18) aufweist, welche der Messsonde (3) zugewandt ist.

9. Prozessanschluss nach mindestens einem der vorhergehenden Ansprüche, **dadurch gekennzeichnet, dass** ein Kegelwinkel der Innenkegelmantelfläche (18) der Formdichtung (2) und eine Außenfläche der Formdichtung (2) einen spitzen Winkel zueinander bilden.

10. Prozessanschluss nach mindestens einem der vorhergehenden Ansprüche, **dadurch gekennzeichnet, dass** die Formdichtung (2) aus einem flexiblen Werkstoff ist und eine Härte von 40 - 90 Shore A aufweist.

11. Prozessanschluss nach mindestens einem der vorhergehenden Ansprüche, **dadurch gekennzeichnet, dass** die Messsonde (3) in der Formdichtung (2) verschiebbar angeordnet ist.

12. Prozessanschluss nach mindestens einem der vorhergehenden Ansprüche, **dadurch gekennzeichnet, dass** die Formdichtung (2) nachrüstbar ist.

## Claims

1. A process connection (1) having an annular gasket (2); and
having a cylindrical measuring probe (3) of a sensor (4),
wherein the gasket (2) is present to seal a process environment (5),
wherein the gasket (2) is disposed between the process connection (1) and the measuring probe (3);
the gasket (2) is fixable by means of a downholder (6);
the gasket (2) contacts a first annular sealing edge at the process connection (1);
wherein the gasket (2) has at least one conical outer jacket surface (9) having a conical outer jacket angle (10) and the process connection (1) has a conical inner surface (11), with the gasket (2) contacting the first annular sealing edge (7) of the conical inner surface (11) of the process connection (1);
wherein the conical outer jacket angle (10) is smaller than the conical inner angle (12),
**characterized in that** the gasket (2) surrounds the cylindrical measuring probe (3) at a second annular sealing edge (8); and
the downholder (6) has a nose (24) that projects into the gasket (2).

2. A process connection in accordance with claim 1, **characterized in that** the downholder (6) has a thread.

3. A process connection in accordance with at least one of the preceding claims, **characterized in that** a spacer (23) is arranged between the downholder (6) and the gasket body (2).

4. A process connection in accordance with at least one of the preceding claims, **characterized in that** dot-shaped burls (13) are arranged along a periphery at a circular cylindrical outer surface of the gasket (2).

5. A process connection in accordance with at least one of the preceding claims, **characterized in that** linear ribs (15) are arranged along a periphery at a circular cylindrical inner surface of the gasket (2), with the linear ribs (15) being in parallel with one another.

6. A process connection in accordance with at least one of the preceding claims, **characterized in that** a contact surface (16) of the gasket (2) for the downholder (6) is perpendicular to a longitudinal axis (17) of the measuring probe (3).

7. A process connection in accordance with at least one of the preceding claims, **characterized in that** the gasket (2) has an acute angle in crosssection at the second annular sealing edge (8).

8. A process connection in accordance with at least one of the preceding claims, **characterized in that** the gasket (2) has a conical inner jacket surface (18) that faces the measuring probe (3).

9. A process connection in accordance with at least one of the preceding claims, **characterized in that** a conical angle of the conical inner jacket surface (18) of the gasket (2) and an outer surface of the gasket (2) form an acute angle with one another.

10. A process connection in accordance with at least one of the preceding claims, **characterized in that** the gasket (2) is composed of a flexible material and has a hardness of 40 - 90 Shore A.

11. A process connection in accordance with at least one of the preceding claims, **characterized in that** the measuring probe (3) is displaceably arranged in the gasket (2).

12. A process connection in accordance with at least one of the preceding claims, **characterized in that** the gasket (2) is retrofittable.

## Revendications

1. Raccord de processus (1) comprenant un joint d'étanchéité profilé annulaire (2) et une sonde de mesure cylindrique (3) d'un capteur (4),
dans lequel le joint d'étanchéité profilé (2) est destiné à assurer l'étanchéité vis-à-vis d'un environnement de processus (5),
le joint d'étanchéité profilé (2) se trouve entre le raccord de processus (1) et la sonde de mesure (3),
le joint d'étanchéité profilé (2) peut être fixé au moyen d'un élément de maintien vers le bas (6),
le joint d'étanchéité profilé (2) s'appuie contre une première arête d'étanchéité annulaire (7) sur le raccord de processus (1),
le joint d'étanchéité profilé (2) présente au moins une surface conique d'enveloppe extérieure (9) ayant un angle de cône d'enveloppe extérieure (10), et le raccord de processus (1) présente une surface conique intérieure (11) ayant un angle de cône intérieur (12), le joint d'étanchéité profilé (2) s'appuie contre la première arête d'étanchéité annulaire (7) de la surface conique intérieure (11) du raccord de processus (1),
l'angle de cône d'enveloppe extérieure (10) est inférieur à l'angle de cône intérieur (12),
**caractérisé en ce que**
le joint d'étanchéité profilé (2) entoure la sonde de mesure cylindrique (3) sur une deuxième arête d'étanchéité annulaire (8), et
l'élément de maintien vers le bas (6) comprend un talon (24) qui pénètre dans le joint d'étanchéité profilé (2).

2. Raccord de processus selon la revendication 1, **caractérisé en ce que** l'élément de maintien vers le bas (6) présente un filetage.

3. Raccord de processus selon l'une au moins des revendications précédentes, **caractérisé en ce qu'**une bague d'insertion (23) est disposée entre l'élément de maintien vers le bas (6) et le joint d'étanchéité profilé (2).

4. Raccord de processus selon l'une au moins des revendications précédentes, **caractérisé en ce que** des plots (13) en forme de points sont disposés le long d'une périphérie sur une surface extérieure cylindrique circulaire du joint d'étanchéité profilé (2).

5. Raccord de processus selon l'une au moins des revendications précédentes, **caractérisé en ce que** des nervures linéaires (15) sont disposées le long d'une périphérie sur une surface intérieure cylindrique circulaire du joint d'étanchéité profilé (2), les nervures linéaires (15) étant parallèles entre elles.

6. Raccord de processus selon l'une au moins des revendications précédentes, **caractérisé en ce qu'**une surface de pression (16) du joint d'étanchéité profilé (2) pour l'élément de maintien vers le bas (6) est perpendiculaire à un axe longitudinal (17) de la sonde de mesure (3).

7. Raccord de processus selon l'une au moins des revendications précédentes, **caractérisé en ce qu'**en section transversale, le joint d'étanchéité profilé (2) présente un angle aigu au niveau de la deuxième arête d'étanchéité annulaire (8).

8. Raccord de processus selon l'une au moins des revendications précédentes, **caractérisé en ce que** le joint d'étanchéité profilé (2) présente une surface enveloppe conique intérieure (18) qui est tournée vers la sonde de mesure (3).

9. Raccord de processus selon l'une au moins des revendications précédentes, **caractérisé en ce qu'**un angle de cône de la surface enveloppe conique intérieure (18) du joint d'étanchéité profilé (2) et une surface extérieure du joint d'étanchéité profilé (2) forment un angle aigu l'une par rapport à l'autre.

10. Raccord de processus selon l'une au moins des revendications précédentes, **caractérisé en ce que** le joint d'étanchéité profilé (2) est en un matériau flexible et présente une dureté de 40 à 90 Shore A.

11. Raccord de processus selon l'une au moins des revendications précédentes, **caractérisé en ce que** la sonde de mesure (3) est disposée de manière coulissante dans le joint d'étanchéité profilé (2).

12. Raccord de processus selon l'une au moins des revendications précédentes, **caractérisé en ce que** le joint d'étanchéité profilé (2) peut être monté a posteriori.
